# EUROPEAN PATENT APPLICATION

(11) **EP 2 819 430 A1**
(43) Date of publication of application: **31.12.2014**
(21) Application number: 13173936.9
(22) Date of filing: 27.06.2013
(51) Int. Cl.: H04R 3/00

(54) **Handheld mobile recording device with microphone characteristic selection means**

(71) Applicant: Speech Processing Solutions GmbH, 1100 Wien (AT)
(72) Inventor: PODHRADSKY, Gerhard, 2232 Deutsch Wagram (AT)
(74) Representative: Röggla, Harald

(57) **Abstract**

A handheld mobile recording device (1) that comprises at least a first microphone (2) to capture a first audio signal (8) and audio processing means (9) to process the first audio signal (8) and storage means (16) to store audio data, which recoding device (1) furthermore comprises position detection means (4) to detect an essential vertical and/or handheld moved first position of the recording device (1) and to detect an essential horizontal and/or static second position of the recording device (1) that furthermore comprises microphone characteristic selection means (6) to select the audio capturing and processing characteristic (7, 12) of the recording device (1) based on the detected position of the recording device (1).

## Description

### FIELD OF THE INVENTION

The present invention generally relates to a handheld mobile recording device that comprises at least a first microphone to capture a first audio signal and audio processing means to process the first audio signal and storage means to store audio data.

### BACKGROUND OF THE INVENTION

Document CN101374178A discloses a recording device to be positioned on a table. The recording device comprises a sound receiving device with an omnidirectional microphone and a unidirectional microphone on a pivotable element. The user of the recording device may manually switch between the omnidirectional microphone for capturing the audio of a meeting and the unidirectional microphone for capturing the audio of only one person close to the unidirectional microphone by pivoting the pivotable element that hosts the microphones. An angle detecting element measures the rotating angle and switches between the two microphones.

Document JP57129057A discloses a handheld transmitter and receiver of a telephone that comprises a microphone and a loudspeaker on both ends of the transmitter and receiver. The handheld transmitter and receiver furthermore comprises a gravity sensor that detects which of the two ends of the transmitter and receiver is located higher at an essential vertical position of the handheld transmitter and receiver. The loudspeaker of the transmitter and receiver at the end located higher and the microphone of the transmitter and receiver at the end located lower are activated for capturing and emitting audio signals based on the detection position of the transmitter and receiver.

Document DE 3401883 A1 discloses an audio system for announcements on e.g. a train station. The audio system comprises a microphone with a proximity sensor to detect a user close by the microphone. Only in case a user is close by the microphone the audio signal of the microphone is captured and processed for the announcement to avoid the need of a dedicated ON/OFF switch and announcement of sound and noise in the room of the user.

### SUMMARY OF THE INVENTION

It is an object of the invention to provide a handheld recording device which supports the user to record the for the use case relevant to be recorded audio signal. This object is achieved with a recoding device that comprises position detection means to detect an essential vertical and/or handheld moved first position of the recording device and to detect an essential horizontal and/or static second position of the recording device and that furthermore comprises microphone characteristic selection means to select the audio capturing and processing characteristic of the recording device based on the detected position of the recording device.

In a first typical use case the recording of for instance a dictation or a personal note is a close talking situation where no environmental noise should be captured. For this purpose the use of a microphone with unidirectional or a noise cancelling characteristics is recommended. This can also be realized by using two and more microphones and applying a beam forming algorithm to focus the sensitivity of the microphone elements towards the sound source. The recording device in this case is mostly held in the hand while recording.

In a second typical use case recording a meeting with an omnidirectional characteristic of the recording device is required, because all the members of the meeting should be captured with an equal recording level. In this use case boundary layer microphones are often used. The recording device in such a situation is normally lying static on the table.

In a third typical use case recording a music concert or similar events requires normally at least two microphones for two- or more channel recording mostly with cardioid characteristic. The recording device with these microphones is often mounted on a tripod.

To ensure that for these three and other typical use cases the relevant to be recorded audio signal is captured and stored with the recording device, the audio signal captured with the first microphone or further microphones of the recording device needs to be captured and/or processed in a special way. This invention is based on the recognition of the fact, that in almost all use cases the user holds the mobile recording device essentially vertical in his hand close to his mouth, as long as the user dictates into the microphone located on the higher end of the recording device. In addition to that, users that want to record the audio signal of a meeting or e.g. concert in almost all use cases put the recording device onto a table, tripod or other desk what leads to an essential horizontal and if not horizontal than at least static position of the recording device.

Based on this recognition the inventive recording device comprises position detection means which may comprise an accelerometer to detect whether the recording device is in a stable or slightly moving handheld position. The position detection means furthermore may comprise a gravity sensor to detect an essential vertical and horizontal position of the recording device. Based on the detection result of the position detection means above use cases are identified and microphone characteristic selection means select either one or more microphones and process the audio signals of these microphones in a way that the microphone characteristic of the complete recording device fits best to the use case to capture and record the audio signal to be recorded in this use case.

There are several different ways and embodiments to realize such a recording device. The simplest way would be a recording device with only the first microphone and audio processing means to adjust the sensitivity of that first microphone. In case of the first use case with the user that dictates into the first microphone is detected, the sensitivity of the first microphone would be reduced to ensure that only the close talking audio signal of the user is captured and processed and stored. In case the second use case to record a meeting or the third use case to record a concert is detected, the sensitivity of the first microphone would be increased to ensure that all kind of sound around the first microphone would be captured and processed and stored. In the third use case to record the concert, audio processing would be at least stereo or quadro processing of parallel audio channels with the need of at least the second microphone.

In another embodiment the recording device comprises two or more microphones at different positions of the housing and the microphone characteristic selection means steer the audio processing means to process only or at least mainly the one audio signal of the first microphone in the dictation use case to realize a more or less unidirectional microphone characteristic of the recording device. Contrary to that in the meeting or concert use case, the microphone characteristics selection means would steer the audio processing means to process all audio signals of all microphones in an equal or more or less equal way to realize a more or less omnidirectional microphone characteristic of the recording device.

In another embodiment the recording device comprises two or more microphones at different positions of the housing, which microphones based on their mechanical structure, comprise a unidirectional or omnidirectional microphone characteristic. The microphone characteristics selection means would steer the audio processing means to use only the audio signal of those microphones that fit to realize the unidirectional microphone characteristic in the dictation use case and the omnidirectional microphone characteristic in the meeting or concert use case. A mixture of above embodiments would be possible as well.

These and other aspects of the invention will be apparent from and elucidated with reference to the embodiments described hereinafter. The person skilled in the art will understand that various embodiments may be combined.

### BRIEF DESCRIPTION OF THE DRAWINGS

Figure 1 shows a handheld mobile recording device that comprises two microphones in a vertical and a horizontal position.
Figure 2 shows a block diagram of the recording device according to a first embodiment.
Figure 3 shows a block diagram of the recording device according to a second embodiment.
Figure 4 shows a block diagram of the recording device according to a third embodiment.

### DETAILED DESCRIPTION OF EMBODIMENTS

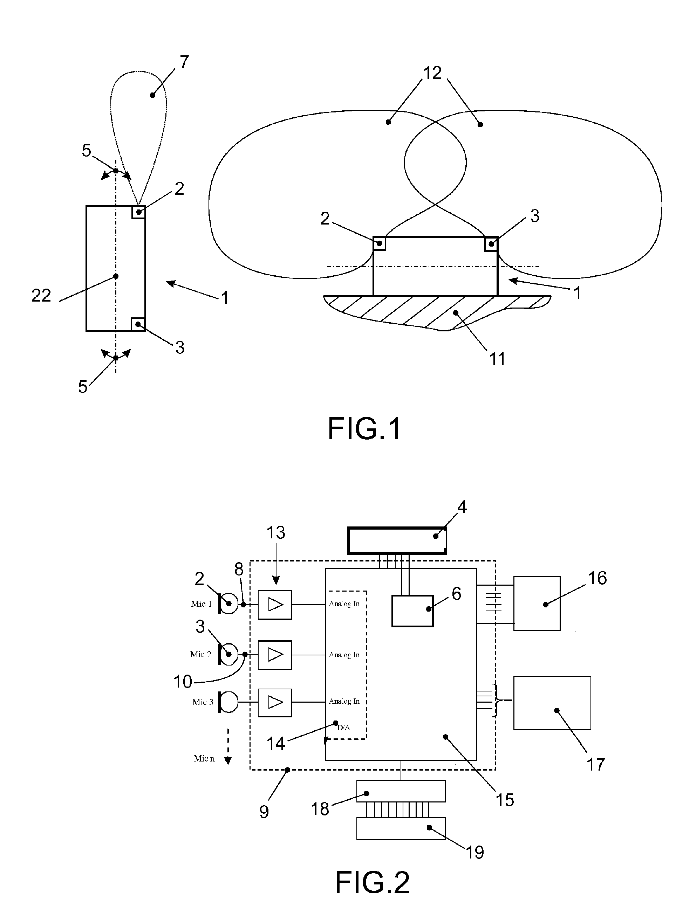

Figure 1 shows a handheld mobile recording device 1 that comprises a first microphone 2 and a second microphone 3. The recording device 1 is shown in a first use case in an essential vertical and handheld moved first position, in the left part of Figure 1. In this first position a user holds the recording device 1 in his hand with the first microphone 2 close to his mouth to dictate a note to be stored in the recording device 1.

The recording device 1 comprises position detection means 4 shown in Figures 2 to 4 that detect the slight movements 5 of the recording device 1 in the hand of the user and that detect the essentially vertical position of the recording device 1. The recording device 1 furthermore comprises microphone characteristic selection means 6 shown in Figures 2 to 4 to select the audio capturing and processing characteristic of the recording device 1 based on the detected position of the recording device 1.

In this vertical and handheld moved first position the recording device 1 is built to realize the unidirectional microphone characteristic 7 with a higher sensitivity of the first microphone 2 located higher at the essential vertical recording device 1 than the sensitivity of the second microphone 3 located lower at the essential vertical recording device 1. In the embodiment shown left side of Figure 1 the microphone characteristic selection means 6 steer the sensitivity of the microphones 2 and 3 in a way that the first microphone 2 has a medium sensitivity to only capture the voice of the user close by in the first audio signal 8 and that the second microphone 3 has a very low sensitivity or is even switched off. Audio processing means 9 of the recording device 1 only process the first audio signal 8 captured with the first microphone 2 and are built to add a particular noise cancelling to realize the unidirectional microphone characteristic 7 in this use case where the position detection means 4 detected the first position of the recording device 1. The recording device 1 could capture a second audio signal 10 from the second microphone 3 with a low sensitivity and use the audio information of the second audio signal 10 for instance to improve noise cancelling.

The recoding device 1 shown in the right part of Figure 1 is in a horizontal and static position on a table 11. The position detection means 4 are built to detect this essential horizontal and static second position of the recording device 1. The recording device 1 is built to realize the omnidirectional microphone characteristic 12 in the second position of the recording device 1 with a more or less equal sensitivity of the first microphone 2 and the second microphone 3 of the recording device 1. In this second position the recording device is built to capture and process the audio signal in the complete area around the recoding device 1 and could be used to record the audio signal of a meeting or the audio signal of a concert in a left and right stereo audio canal.

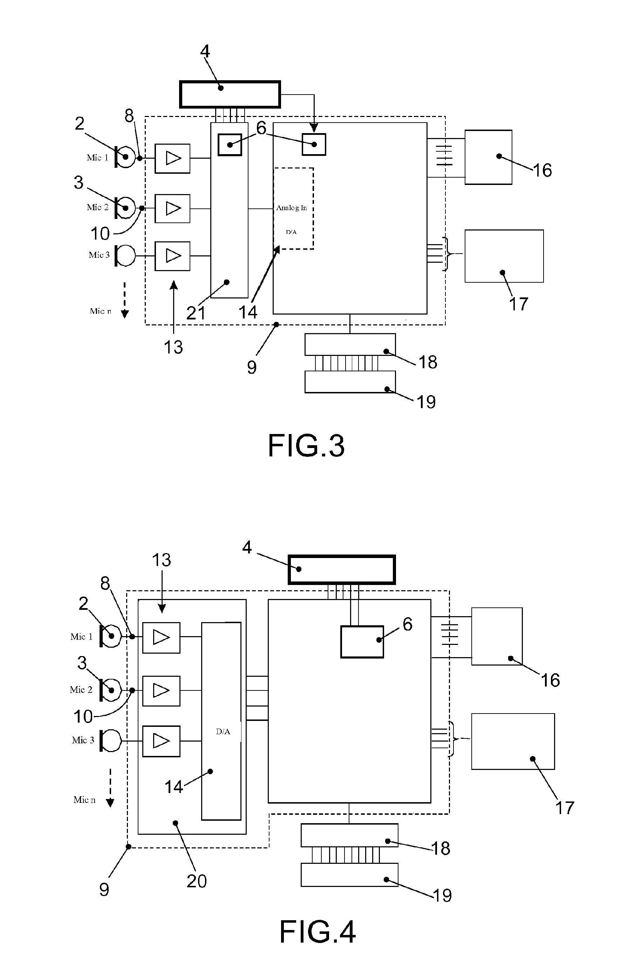

Figures 2 to 4 should three different embodiments of the recording device 1 with position detection means 4 and microphone characteristic selection means 6. The recoding device 1 comprises one or more microphones 2 and 3 for capturing the sound and transforming it into electrical audio signals 8 and 10. The recording device 1 furthermore comprises one or more microphone amplifiers 13 and an analog to digital converter 14 to convert the analog audio signals 8 and 10 into digital audio information. A microprocessor or a digital signal processor 15 processes and optionally compresses (e.g. MP3) the digital audio information and store the processed/compressed data on a memory 16 (e.g. flash memory or HDD). The recording device 1 furthermore comprises function controls 17 like buttons, switches or slide switches for controlling the functions (e.g. record, stop, play, rewind, next file, .....) and a display controller 18 and a display 19 for displaying information (e.g. filename, file position, remaining time, recent function, ....). In certain microcontrollers and DSPs the A/D conversion is integrated in the component like shown in Figure 2, in other embodiments this needs to be done external by a codec 20 as shown in Figure 4. The recording device shown in Figure 3 comprises a switching circuitry 21 to switch the audio signal captured with one of the microphones to the analog to digital converter 14. Part of the microphone characteristic selection means 6 that switches between the different microphones is realized in this switching circuitry 21 and the other part of the microphone characteristic selection means 6 that steers the processing of the audio signal according to the detected position is realized in the microprocessor or a digital signal processor 15.

All three embodiments of the recording device 1 shown in Figures 2 to 4 comprise position detection means 4 which detect the position of the recording device 1 with one or two sensors. One of these sensors of the position detection means 4 is realized as gravity sensor that detects whether the recording device 1 is in an essential vertical or horizontal position. The position detection means 4 furthermore detect the movements of the recording device 1 with another sensor. This sensor is realized as accelerometer to detect the essential handheld moved position and the essential static position of the recording device 1.

In another embodiment the inventive recording device only comprises the accelerometer and decides about the two possible positions based on only the detected movement (first position) or the missing movement (second position). In still another embodiment the inventive recording device only comprises the gravity sensor and decides about the two possible positions based on only the detected essential vertical position (first position) or the essential horizontal position (second position).

Based on the detected position the microphone characteristic selection means 6 select one or more of the microphones in order to realize the particular microphone characteristic 7 or 12 of the recording device 1. This can be done by using different types of microphones with different acoustical characteristics. The first microphone 2 could be a microphone with directional sensitivity and the second microphone 3 e.g. an omnidirectional type. Depending on the position detected by the position detection means 4, only one of these microphones 2 or 3 would be looped through.

Another option is to generate a particular microphone characteristic by software algorithm in the microprocessor or digital signal processor 15 processing the audio data coming from the microphones (e.g. beam forming). With the information delivered from the position detection means 4, the algorithm itself or the parameters of the algorithm used are changed to change the total characteristic of the microphone array.

In still another embodiment of the invention the recording device comprise e.g. twelve microphones in different areas of the recording device. Some of these microphones comprise a directional and some comprise a unidirectional characteristic. Based on the detection result of the position detection means 4 the microphone characteristic selection means use some or all of these twelve microphones with equal of different sensitivity and use some or all of the audio signals captured with maybe a particular beam forming or noise cancelling algorithm to ensure that the for the use case relevant audio signals are captured and processed and stored.

In a further embodiment the detection result of the accelerometer could be used to detect a movement when the user shakes the recording device from one side to the other. This shaking movement could be detected as third position of the recording device and the microphone characteristics selection means could e.g. switch between the first and second microphone with the same frequency as the user shakes the recording device. Special recording effects could be realized for the user based on the position or movement of the recording device.

In still a further embodiment the position detection means could comprises a further sensor that detects whether the recording device 1 is in a horizontal stable position with its small or its large surface of the housing on the table. Based on this detection result the microphone characteristic selection means could either activate or deactivate additional microphones of the recording device that are located in the surface of the housing that lies on the table to capture audio from the ground side e.g. through a grid structure of the table. Based on these different embodiments a man skilled in the will understand that there are several other embodiments possible and in the scope of the invention.

The term "essential vertical" has to be understood that the midline 22 of the recording device is in the range of about 90° +/- 30 °. The term "moved position" has to be understood as typical movements a user holding a recording device while dictating into the microphone makes. A man skilled in the art knows how to realize processing means including noise cancelation to process audio signals in a way that the recording device realizes a directional- or an omnidirectional microphone characteristic.

A handheld mobile recording device may be a dictation machine, but a mobile phone with a function to store audio data as well. It even could be wrist watch with a function to store audio data.

## Claims

1. Handheld mobile recording device (1) that comprises at least a first microphone (2) to capture a first audio signal (8) and audio processing means (9) to process the first audio signal (8) and storage means (16) to store audio data, **characterized in, that** the recoding device (1) comprises
position detection means (4) to detect an essential vertical and/or handheld moved first position of the recording device (1) and to detect an essential horizontal and/or static second position of the recording device (1) that furthermore comprises
microphone characteristic selection means (6) to select the audio capturing and processing characteristic (7, 12) of the recording device (1) based on the detected position of the recording device (1).

2. Recording device (1) according to claim 1, wherein the microphone characteristic selection means (6) are built to select a low sensitivity of the first microphone (2) in case the position detection means (4) detected the first position of the recording device (1) and wherein the microphone characteristic selection means (6) are built to select a high sensitivity of the first microphone (2) in case the position detection means (4) detected the second position of the recording device (1).

3. Recording device (1) according to claim 1 or 2, that comprises at least a second microphone (3) to capture a second audio signal (10) and audio processing means (9) to process the second audio signal (10) to be stored with the storage means (16) as audio data and wherein the microphone characteristic selection means (6) are built to select an unidirectional microphone audio capturing characteristic (7) of the recording device (1) with the first microphone (2) and optionally the second microphone (3) in case the position detection means (4) detected the first position of the recording device (1) and wherein the microphone characteristic selection means (6) are built to select an omnidirectional microphone audio capturing characteristic (12) of the recording device (1) with the first microphone (2) and the second microphone (3) in case the position detection means (4) detected the second position of the recording device (1).

4. Recording device (1) according to claim 3, wherein the recording device (1) is built to realize the unidirectional microphone characteristic (7) in the first position of the recording device with a higher sensitivity of the first microphone (2) located higher at the essential vertical recording device (1) than the sensitivity of the second microphone (3) located lower at the essential vertical recording device (1).

5. Recording device (1) according to claim 3, wherein the recording device (1) is built to realize the omnidirectional microphone characteristic (12) in the second position of the recording device (1) with a more or less equal sensitivity of the at least first microphone (2) and second microphone (3) of the recording device (1).

6. Recording device (1) according to any of the proceeding claims, wherein the position detection means (4) comprise a gravity sensor to detect an essential vertical position and an essential horizontal position of the recording device (1) and/or wherein the position detection means (4) comprise an accelerometer to detect the essential handheld moved position and the essential static position of the recording device (1).

7. Recording device (1) according to any of the proceeding claims, wherein the position detection means (4) are built to detect the first position only in case the essential vertical and handheld moved position is detected and wherein the position detection means (4) are built to detect the second position only in case the essential horizontal and fixed position is detected.

8. Recording device (1) according to any of the proceeding claims, wherein the audio processing means (9) are built to add noise cancelling to realize the unidirectional microphone characteristic (7) in case the position detection means (4) detected the first position of the recording device (1).

9. Recording device (1) according to claim 3, wherein the first microphone (2) comprises a different microphone characteristic than the second microphone (3).

10. Recording device (1) according to any of the proceeding claims, wherein the microphone characteristics (7, 12) of the first (2) and any further microphones (3) are realized with a processing algorithm in the audio processing means (9) to process the audio signals (8, 10) of the first (2) and further microphones (3).
